# EUROPÄISCHE PATENTANMELDUNG

(11) **EP 0 675 328 A2**
(43) Veröffentlichungstag der Anmeldung: **04.10.1995**
(21) Anmeldenummer: 95103010.5
(22) Anmeldetag: 03.03.1995
(51) Int. Cl.: F24F 11/047, F24F 13/14, F16K 17/12

(54) **Vorrichtung zur Druckentlastung einer lüftungstechnischen Anlage**

(30) Priorität: 31.03.1994 DE 4411260
(71) Anmelder: H KRANTZ-TKT GmbH, D-51465 Bergisch Gladbach (DE)
(72) Erfinder: Gores, Stefan, Dipl.-Ing., D-52070 Aachen (DE)
(74) Vertreter: Bauer, Hubert, Dipl.-Ing.

(57) **Zusammenfassung**

Zur Druckentlastung einer lüftungstechnischen Anlage wird eine Vorrichtung vorgeschlagen, die aus einem horizontal durchströmbaren Gehäuse (1) und einer darin um eine horizontale Achse (2) schwenkbar gelagerten Klappe (3) besteht. Die Achse (2) unterteilt die Klappe (3) in ein kleineres Klappenteilstück (5) und in ein größeres Klappenteilstück (6). Im Bereich der Achse (2) ist die Klappe (3) mit einem Tragarm (7) verbunden, der mit einem verlagerbaren Rückstellgewicht (8) bestückt ist. Auf der Anströmseite der Klappe (3) ist eine sich über den Klappenumfang erstreckende elastische Dichtungsscheibe (11) vorgesehen, die im Außenrandbereich des größeren Klappenteilstücks (4) am Gehäuse (1) und im Außenrandbereich des kleineren Klappenteilstücks (5) an diesem befestigt ist. Die so ausgebildete Vorrichtung ermöglicht ein Schaltverhalten, so daß beim Auftreten eines schnellen Druckanstiegs im Leitungssystem einer lüftungstechnichen Anlage die Klappe (3) öffnet, sobald ein bestimmter Öffnungsdruck erreicht wird, und ein weiterer Druckanstieg über einen maximal zulässigen Druck im Kanalsystem verhindert wird.

## Beschreibung

Die Erfindung betrifft eine Vorrichtung zur Druckentlastung einer lüftungstechnischen Anlage, bestehend aus einem horizontal durchströmbaren Gehäuse, einer darin um eine horizontale Achse schwenkbar gelagerten Klappe, die durch die Achse in ein größeres und ein kleineres Klappenteilstück unterteilt ist, und aus einem im Bereich der Achse mit der Klappe starr verbundenen Tragarm, der mit einem verlagerbaren Rückstellgewicht bestückt ist.

Die Dimensionierung der Wandstärke von lüftungstechnischen Anlagen basiert in der Regel auf den zu erwartenden Über- bzw. Unterdruckbelastungen im störungsfreien Betrieb. Das Druckniveau schwankt im Normalfall in Abhängigkeit vom Strömungswiderstand eines Kanalnetzes sowie von einem Volumenstrombedarf der Verbraucher in einem unkritischen Druckbereich. Beim Eintreten einer Störung, zum Beispiel verursacht durch die Fehlbedienung einer Absperrklappe oder durch das schlagartige Schließen einer Brandschutzklappe, kann das Kanalsystem jedoch einer unzulässig hohen Druckbelastung ausgesetzt werden, die möglicherweise zu dessen Zerstörung führt. Um einen solchen Schadensfall zu verhindern, werden Vorrichtungen der eingangs beschriebenen Art eingesetzt und haben die Funktion eines Sicherheitsventils, indem vor Erreichen eines maximal zulässigen Druckwertes das Kanalsystem durch das Öffnen einer Bypass-Leitung geschützt wird. Im störungsfreien Betrieb erfüllen diese Vorrichtungen die Aufgabe einer dicht schließenden Absperrklappe.

Um die Zerstörung eines Kanalsystems infolge einer unzulässig hohen Druckbelastung zu verhindern, sind Vorrichtungen mit gewichtsbelasteten Klappen in verschiedenen Ausführungsformen allgemein bekannt. Diese Druckentlastungsklappen können übrigens in der Regel auch durch eine um 180 ° gedrehte Anordnung zum Schutz vor unzulässig hohen Unterdruckbelastungen verwendet werden.

Zu den wesentlichen Forderungen einer Vorrichtung zur Druckentlastung zählt die spontane Reaktion auf einen plötzlichen Druckanstieg. Die große Massenträgheit von Rückstellgewichten hat jedoch einen negativen Einfluß auf das dynamische Verhalten. Darüber hinaus bedingen die hohen Rückstellmassen eine verwindungssteife Stahlkonstruktion, welche sowohl das Gesamtgewicht als auch die Fertigungskosten negativ beeinflussen.

Aus der DE 41 25 710 A1 ist bereits eine Vorrichtung der eingangs beschriebenen Art bekannt, bei der die vorbeschriebenen Nachteile durch die außermittige Lagerung der Druckentlastungsklappe verhindert werden. Durch die aus der Klappenmitte verlagerte Anordnung der Drehachse wird das durch den Kanalinnendruck erzeugte Öffnungsmoment reduziert, da die auf das kleinere Klappenteilstück wirkende Druckkraft ein Schließmoment bewirkt. Gleichzeitig wird die das Öffnungsmoment bestimmende Fläche vermindert. Es ergibt sich dadurch die Möglichkeit für beliebige Öffnungsdrücke und festgelegte Kanalgeometrien, die Schließmomente und Rückstellmassen kleinzuhalten.

Bei der bekannten Vorrichtung ist die Klappe aus zwei unterschiedlich großen Klappenteilstücken zusammengesetzt, die über ein Gestänge mit einer gemeinsamen Drehachse verbunden sind. Ein in seiner Lage verstellbares Rückstellgewicht ist ebenfalls über einen abgewinkelten Tragarm mit dem Gestänge verbunden.

Durch diese Ausbildung arbeitet die bekannte Vorrichtung mit einem Regelverhalten, wobei im störungsfreien Betrieb der Kanaldruck innerhalb einer bestimmten Bandbreite unterhalb des Öffnungsdruckes liegt. Eine Betriebsstörung führt durch das Schließen einer Absperrklappe zu einem schnellen Druckanstieg, so daß die Druckentlastungsklappe öffnet, sobald der Öffnungsdruck erreicht wird und ein weiterer Druckanstieg über den maximal zulässigen Kanaldruck verhindert ist. Während der Störung wird der statische Druck im Kanalsystem unabhängig vom zu entlastenden Volumenstrom konstant gehalten. Der Öffnungswinkel der Druckentlastungsklappe stellt sich also so ein, daß der Druckverlust des zu entlastenden Volumenstromes gleich dem eingestellten Öffnungsdruck ist. Sobald dieser unterschritten wird, schließt diese bekannte Druckentlastungsklappe selbsttätig.

Der Erfindung liegt die Aufgabe zugrunde, eine Vorrichtung der eingangs beschriebenen Art so auszubilden, daß sich mit der darin eingesetzten Klappe anstelle eines Regelverhaltens ein Schaltverhalten bewirken läßt. Die Klappenstellungen sollen also auf eine Offenstellung und eine Schließstellung beschränkbar sein, wobei unterhalb eines bestimmten Öffnungsdruckes die Klappe geschlossen bleiben soll, jedoch die Klappe oberhalb dieses bestimmten Öffnungsdruckes spontan in ihre maximale Offenstellung überführbar sein soll. Dadurch wird angestrebt, den Druck im Kanalsystem auf ein Niveau deutlich unterhalb des Öffnungsdruckes absinken zu lassen, wobei das Druckniveau, auf welches der Kanaldruck absinkt, vom zu entlastenden Volumenstrom abhängig sein soll.

Zur Lösung dieser Aufgabe wird von einer Vorrichtung der im Oberbegriff des Anspruchs 1 genannten Art ausgegangen, welche erfindungsgemäß die in seinem kennzeichnenden Teil angegebenen Merkmale aufweist.

Ausgestaltungen der Erfindungen ergeben sich aus den Patentansprüchen 2. bis 5.

In der Zeichnung ist ein Ausführungsbeispiel der erfindungsgemäßen Vorrichtung in einem Schnitt dargestellt und wird nachfolgend näher beschrieben. Es zeigt:
- Fig. 1: die Vorrichtung in Klappen-Schließstellung
und
- Fig. 2: die Vorrichtung in Klappen-Offenstellung.

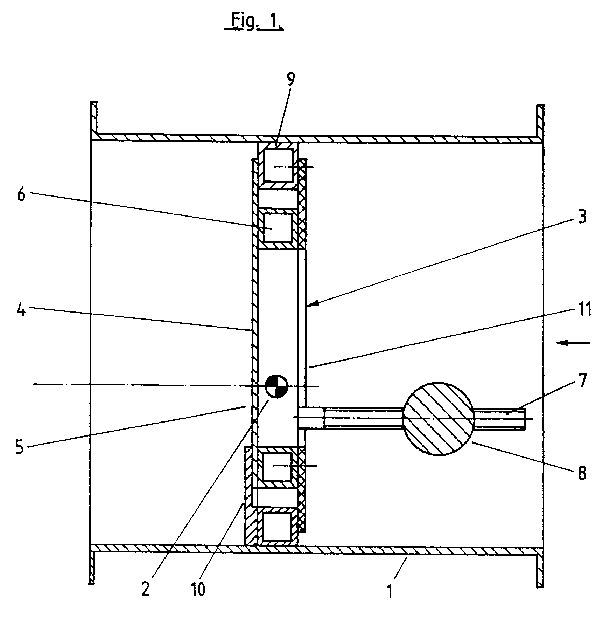

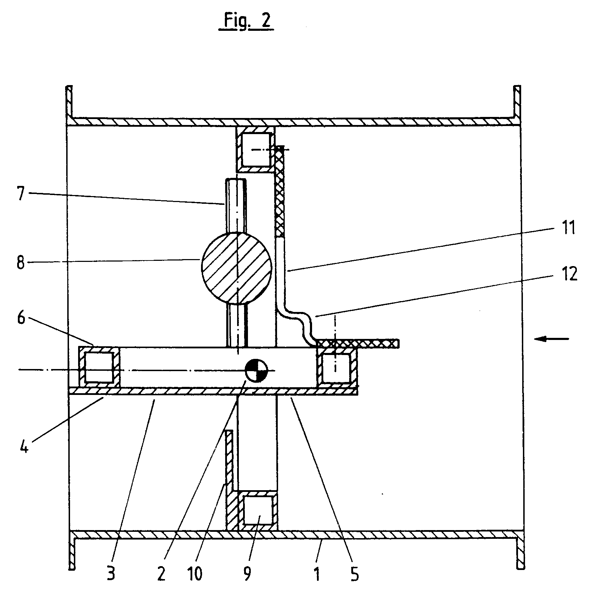

In einem mit seiner Mittelachse horizontal ausgerichteten, von rechts nach links durchströmbaren Gehäuse 1 ist senkrecht zur Strömungsrichtung eine gleichfalls horizontal ausgerichtete Achse 2 vorgesehen. Um diese ist eine Klappe 3 aus ihrer in Fig. 1 dargestellten Schließstellung in die in Fig. 2 dargestellte Offenstellung schwenkbar.

Die Achse 2 unterteilt die Klappe 3 in ein größeres und ein kleineres Klappenteilstück 4 bzw. 5. Ein auf der Anströmseite der Klappe 3 diese versteifender Klappenrahmen 6 besteht aus einem Vierkantrohr und ermöglicht eine vollständige Vormontage der Klappeneinzelteile außerhalb des Gehäuses 1. Gleichfalls auf der Anströmseite ist die Klappe 3 mit einem zur Klappenebene senkrecht ausgerichteten Tragarm 7 ausgestattet, der als Gewindestange ausgebildet ist, die ein mit einer nicht dargestellten Gewindebohrung versehenes Rückstellgewicht 8 aufnimmt.

In der Schließstellung der Klappe 3 ist diese mit Spiel von einem gleichfalls aus Vierkantrohr gefertigten Gehäuserahmen 9 eingefaßt, der dicht mit der Innenseite des Gehäuses 1 verbunden ist.

Am unteren Schenkel des Gehäuserahmens 9 ist ein über dessen Innenseite vorstehendes Leitblech 10 angeschlossen, mit dem das Schaltverhalten der Klappe 3 wesentlich beeinflußbar ist. Das Leitblech 10 bewirkt nämlich eine Strömungsumlenkung, aus der ein zusätzliches Öffnungsmoment resultiert, welches in Verbindung mit dem abnehmenden Rückstellmomentenverlauf die Klappe 3 unmittelbar nach der einsetzenden Öffnungsbewegung beschleunigt in ihre maximale Offenstellung überführt.

Zur leckagefreien Abdichtung eines für die Bewegungsfreiheit bedingten unerläßlichen Spaltes zwischen dem Klappenrahmen 6 und dem Gehäuserahmen 9 ist eine Dichtungsscheibe 10 vorgesehen. Diese ist im Außenrandbereich des größeren Klappenteilstückes 4 am Gehäuserahmen 9 und im Außenrandbereich des kleineren Klappenteilstückes 5 am Klappenrahmen 6 dicht angeschlossen. Aufgrund der einteiligen Konstruktion der Klappe 3 ist die gleichfalls einteilige Dichtungsscheibe 11, also nicht unmittelbar am Blatt der Klappe 3, sondern auf der aus dem Klappenrahmen 6 und dem Gehäuserahmen 9 kombinierten Rahmenkonstruktion plaziert. Oberhalb der Achse 2 erfolgt die Befestigung also am Gehäuserahmen 9 und unterhalb der Achse 2 am Klappenrahmen 6. Im Bereich der Achse 2 darf die Dichtungsscheibe 11 nicht fixiert werden, da bei der Schwenkbewegung der Klappe 3 in die Offenstellung die Dichtungsscheibe 11 gestaucht würde, sofern sie daran gehindert wäre, beispielsweise eine in Fig. 2 im Bereich der Achse 2 veranschaulichte Falte 12 zu bilden.

Eine Schwenkbewegung der Klappe 3 über die 90-°-Öffnungsposition hinaus kann in einfacher Weise durch einen nicht dargestellten Anschlag verhindert werden.

## Patentansprüche

1. Vorrichtung zur Druckentlastung einer lüftungstechnischen Anlage, bestehend aus einem horizontal durchströmbaren Gehäuse, einer darin um eine horizontale Achse schwenkbar gelagerten Klappe, die durch die Achse in ein größeres und ein kleineres Klappenteilstück unterteilt ist, und aus einem im Bereich der Achse mit der Klappe starr verbundenen Tragarm, der mit einem verlagerbaren Rückstellgewicht bestückt ist, dadurch gekennzeichnet, daß der Klappe (3) auf ihrer Anströmseite eine sich über den Klappenumfang erstreckende elastische Dichtungsscheibe (11) zugeordnet ist, die im Außenrandbereich des größeren Klappenteilstücks (4) am Gehäuse (1) und im Außenrandbereich des kleineren Klappenteilstücks (5) an diesem befestigt ist.

2. Vorrichtung nach Anspruch 1, dadurch gekennzeichnet, daß die Klappe (3) auf ihrer Anströmseite mit einem Klappenrahmen (6) versehen ist, über den ein Außenrandstück der Dichtungsscheibe (11) nach außen vorsteht und in Klappenschließstellung einen den Klappenrahmen (6) einfassenden Gehäuserahmen (9) überlappt, an dem ein Außenrandstück der Dichtungsscheibe (11) befestigt ist und gegen den der Außenrand der Dichtungsscheibe (11) im übrigen anliegt.

3. Vorrichtung nach Anspruch 1 oder 2, dadurch gekennzeichnet, daß die Klappe (3) mit einem auf einem maximalen Schwenkradius liegenden Klappenrandstück den Gehäuserahmen (9) auf der der Dichtungsscheibe (11) gegenüberliegenden Seite überlappt.

4. Vorrichtung nach einem der Ansprüche 1 bis 3, dadurch gekennzeichnet, daß im Bereich des kleineren Klappenteilstückes (5) im Gehäuse (1) ein Leitblech (10) auf der der Dichtungsscheibe (11) gegenüberliegenden Seite des Gehäuserahmens (9) angeordnet ist und über dessen Innenseite vorsteht.

5. Vorrichtung nach einem der Ansprüche 1 bis 4, dadurch gekennzeichnet, daß der Klappenrahmen (6) und der Gehäuserahmen (9) rechteckförmig ausgebildet und aus einem Vierkanthohlprofil hergestellt sind.
